# EUROPEAN PATENT SPECIFICATION

(11) **EP 3 798 586 B1**
(45) Date of publication and mention of the grant of the patent: **03.05.2023**
(21) Application number: 19000429.1
(22) Date of filing: 24.09.2019
(51) Int. Cl.: G01G 19/18, G01G 23/01

(54) **AUTOMATED WEIGHING APPARATUS**
AUTOMATISCHE WIEGEVORRICHTUNG
APPAREIL DE PESÉE AUTOMATISÉ

(43) Date of publication of application: 31.03.2021
(73) Proprietor: Jensen USA, Inc., Panama City, Florida 32405 (US)
(72) Inventor: Burmester, Ben, Panama City, Florida 32405 (US); Bolton, Jeff, Panama City, Florida 32405 (US); Sutariya, Jignesh, Panama City, Florida 32405 (US)
(74) Representative: Franks & Co Limited

(56) References cited:
- EP-A1- 3 255 395
- DE-A1- 10 237 513

## Description

### BACKGROUND OF THE INVENTION

### Field of the Invention

The present invention relates to the field of equipment for automated laundry installations. In particular, the present invention relates to automated weighing apparatus featuring an automated calibration component for use in commercial and industrial laundry installations.

### Description of the Related Art

Commercial and industrial laundry installations typically include a storage container, referred to in the trade as a 'bin', for holding and weighing laundry items during a laundering process. In this regard, a typical installation may include several such bins for holding laundry at various stages of a laundering process.

At least one use of such a bin is for receiving soiled laundry prior to commencement of a laundering process, and for holding the soiled laundry until such time as the laundering process is commenced. Such laundering processes, including the holding of laundry in bins, tends to be automated and controlled by computer controllers, with stages of the laundering process being initiated when a detected condition is met. Depending on the particular type of installation, laundering of soiled laundry may be performed in batches, where it may be desirable to hold the soiled laundry in a storage bin until the desired quantity of laundry is present.

The amount of laundry held in a bin is typically measured in one of two ways: by counting of each item deposited, for example, using a light trap (a 'counting' bin); or by measurement of the combined mass of the bin and laundry (a 'weighing bin'). Typically bins of the 'weighing' type include a load cell for measuring the combined mass of the bin and laundry contained therein, allowing the computer controller to determine the mass (and volume where relevant) of the laundry contained therein. When the mass of laundry contained in the bin reaches a threshold value, the computer controller may cause the laundry to be discharged from the bin, typically on to a conveyor belt for later stages of the laundering process.

A problem is encountered in such apparatus of the prior art, in as much that the load cell for measuring the mass of the bin will lose its calibration over time, for example, because of material fatigue or mechanical wear. As a result, the load cell will produce incorrect, unreliable, or otherwise false readings of the mass of the bin. This may result in either under or over filling of the bin, and so under or over loading of machinery performing the laundering process, and so reducing the efficiency with which the laundry is laundered.

To reduce the error in the measured weight of such a bin, conventionally, the load cell is calibrated periodically by an operative as a matter of routine machinery maintenance. Typically, this will involve exerting a known force on the load cell by placing an object of known mass on the load cell and determining a correction factor to be applied to compensate for the inaccuracy of the sensor. However, such a calibration procedure is complex, time consuming, and due to the typical inaccessibility of such bins in a laundering installation, can be dangerous and unhygienic. Moreover, because of the aforementioned problems experienced with conventional calibration techniques, calibration of conventional bins tends to be performed only relatively rarely, rather than on a continuous basis. Developments have been made to address such problems known in the art, through the incorporation of a motorised calibration apparatus, an example of which being that of document EP3255395 (JENSEN). However, further developments are still highly sought after towards fully automated systems which require less down-time, less manual maintenance and are more readily maintained.

Accordingly, it is an object of the present invention to address and obviate the aforementioned issues known in the art. In particular, it is an object to provide an apparatus for automated weighing, featuring an automated calibration apparatus for load cells, adaptable to new and old systems.

### BRIEF SUMMARY OF THE INVENTION

According to the present invention, there is provided an automated weighing apparatus comprising: a container, suitable for containing at least one object to be weighed; a container rail, configured to freely support said container which is movably coupled to said container rail; and a supporting frame; said supporting frame is supports the container rail by way of a vertically extending weighing assembly, said weighing assembly being connected adjacent its upper end to the supporting frame and adjacent its lower end to the container rail, said weighing assembly comprising a lifting cylinder, a load cell and a calibration device.

Preferably, the actuating member is situated adjacent the first end of the weighing assembly and is connected to a first surface of the supporting frame.

Advantageously, the actuating member comprises a lifting cylinder, having an elongate actuating element that is connected to the load cell, allowing for movement of the container rail toward and away from (raising and lowering respectively) the supporting frame.

Preferably, the elongate actuating element is connected to the load cell by way of a first linkage element adjacent its first end.

Preferably, the first linkage element is releasably attached adjacent a first end of the load cell and adjacent a first end of the calibration device.

Advantageously, the load cell is releasably attached adjacent its second end to a second linkage element, said second linkage element being connected to a first surface of the container rail, thus allowing for translation of forces exerted upon said container rail to the load cell.

Advantageously, the calibration device is releasably attached adjacent a second end to the second linkage element by way of an elongate engaging element.

Most advantageously, the calibration device is aligned alongside and parallelly to the load cell and is selectively operatively connected to said load cell by way of the elongate engaging element, allowing for selective interaction of the calibration device or isolation when not required.

Preferably, the elongate engaging element is connected at a first end to a calibration actuating element of the calibration device.

Advantageously, the elongate engaging element slidably retains the second linkage element adjacent its second end, allowing the elongate engaging element to pass freely over the second linkage element.

More advantageously, the elongate engaging element extends laterally between the second linkage element and the calibration actuating element of the calibration device, allowing the calibration device to be arranged alongside the load cell and enabling selective interaction with said load cell.

Most advantageously, the calibration actuating element is moveable relative to a body of the calibration device between a non-calibrating position, in which the calibration actuating element is retracted and housed partially within the body of the calibration device, and a calibrating position, in which the calibration actuating element is protracted and extends longitudinally from the body of the calibration device.

Preferably, the elongate engaging element is arranged about a body of the second linkage element when the calibration device is in the non-calibrating position, freely retained thereabout.

More preferably, the elongate engaging element contacts either a second end of the second linkage element or the first surface of the container rail when the calibration device is in the calibrating position, exerting a known force upon the load cell.

Advantageously, the load cell and calibration device are arranged so as to be mutually moveable upon actuation of the actuating member, thereby allowing these components of the weighing assembly to raise and lower with the container rail with the calibration device isolated unless otherwise selected.

Preferably, the calibration device is not engaged with the weighing apparatus unless in the calibrating position.

More preferably, the elongate actuating element of the lifting cylinder is moveable from a filling position, where the elongate actuating element is protracted away from a body of the lifting cylinder, and a dispensing position, where the elongate actuating element is retracted and housed within the body of the lifting cylinder.

Preferably, the container rail is elongate, is connected to the weighing assembly adjacent a first end and is provided with a pivot assembly adjacent a second end

Advantageously, the pivot assembly is connected to a circuit frame, said circuit frame being utilised for the storage of containers

Most advantageously, the pivot assembly is adapted to allow angular movement of the container rail relative to the circuit frame, where the first end of the container rail is raised upon retraction of the elongate actuating element, allowing the container originally retained at the first end of the container rail to pass along said frame, past the pivot assembly and onto the circuit frame for laundry dispensing

### BRIEF DESCRIPTION OF THE DRAWINGS

The invention will now be described by way of example only with reference to the accompanying drawings, which are purely schematic and not to scale, of which:
Figure 1a is a plan view illustrating an example environment in which an automated weighing apparatus according to a specific embodiment of the present invention may be utilised;
Figure 1b is an elevation of the example environment of Figure 1a in which the present automated weighing apparatus may be utilised;
Figure 1c is a plan view of Zone 1 of Figure 1a, separated from a remainder of the apparatus, in which the present automated weighing apparatus may be utilised;
Figure 1d is an elevation of Zone 1 of Figure 1a, separated from a remainder of the apparatus, in which the present automated weighing apparatus may be utilised;
Figure 2a is a plan view of the automated weighing apparatus of Figure 1c in isolation;
Figure 2b is a frontal elevation of the automated weighing apparatus of Figure 2a;
Figure 2c is a side elevation of the automated weighing apparatus of Figure 2a;
Figure 3a is a first side elevation of a weighing assembly of the automated weighing apparatus of Figure 2a;
Figure 3b is a front elevation of the weighing assembly of the automated weighing apparatus of Figure 3a; and
Figure 3c is a second side elevation of the weighing assembly of the automated weighing apparatus of Figure 3a.

### DETAILED DESCRIPTION OF EXAMPLE EMBODIMENTS

### Figures 1a - 1d

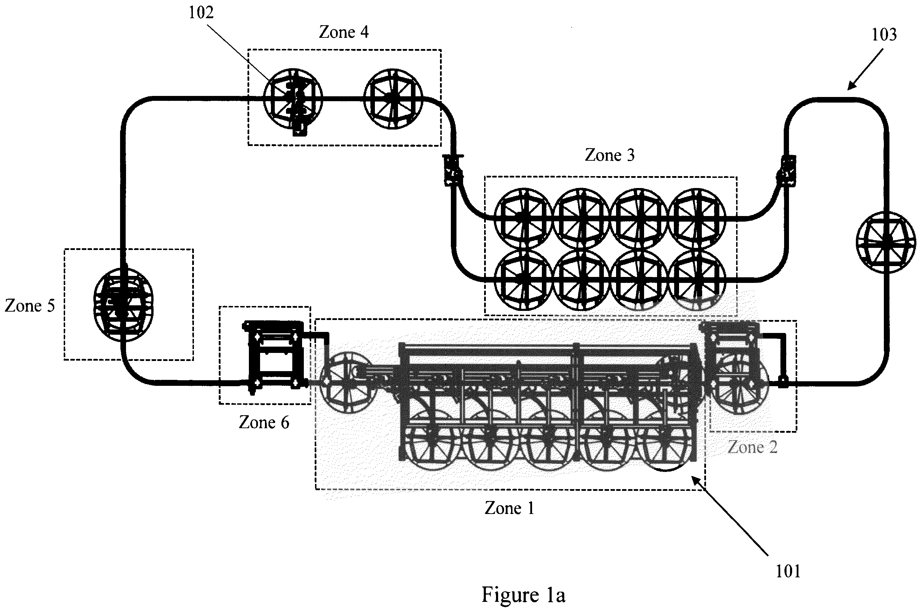

Referring now to the Figures, and to Figures 1a to 1d in particular, an example of an environment in which an automated weighing apparatus according to the present invention (indicated generally at 101) can be used is shown. In the specific embodiment described herein, the automated weighing apparatus takes the form of an apparatus for measuring the weight of laundry stored in a container (commonly referred to in the trade as a laundry 'bin').

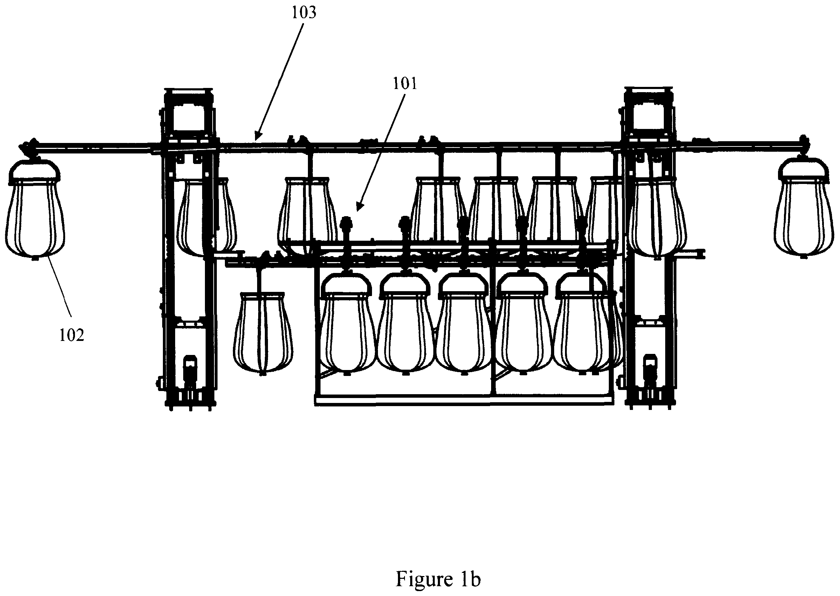

The Figures illustrate a commercial laundering assembly, comprising of distinct zones (Zones 1-6), each zone performing a distinct stage of a laundering process. It should be noted that Figures 1a & 1b illustrate a typical laundering process for the purposes of illustrating an embodiment of the present invention, and those skilled in the art of laundering will be readily able to devise a functional laundering installation. In this regard, Zone 1 represents a laundry sorting area for filling of bins 102 with soiled laundry. Once said bins 102 are full (i.e., once a pre-determined limit has been met, either by weight or volume), they are discharged into Zone 2. Zone 2 represents a buffer section for temporary storage of full bins 102. Full bins 102 will pass from Zone 2 into Zone 3 (longer term storage of full bins 102) once there is appropriate space in Zone 3. Full bins 102 are discharged from Zone 3 to Zone 4 for emptying of said bin 102. Empty bins 102 are then moved onto Zone 5 for temporary storage of said empty bins 102. An empty bin 102 is moved from Zone 5 to Zone 6 to act as a buffered / primed empty bin 102. Once a free slot is made available in Zone 1 (upon discharge of a full bin 102), an empty bin enters the appropriate free section of Zone 1 by way of Zone 6. Each of these zones are connected by way of a rail network in the form of a circuit (indicated generally at 103). Examples of such carousel style laundry installations are known in the art.

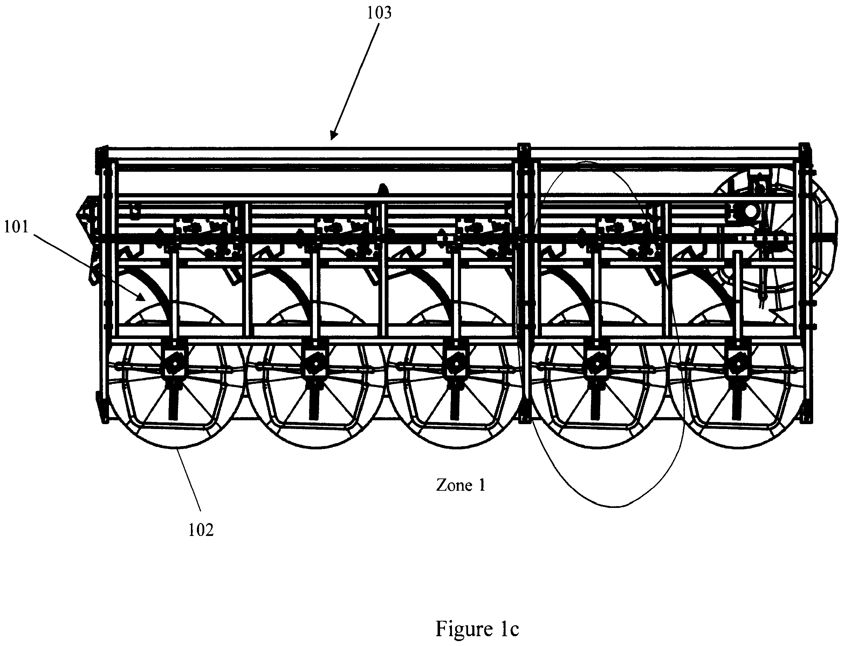

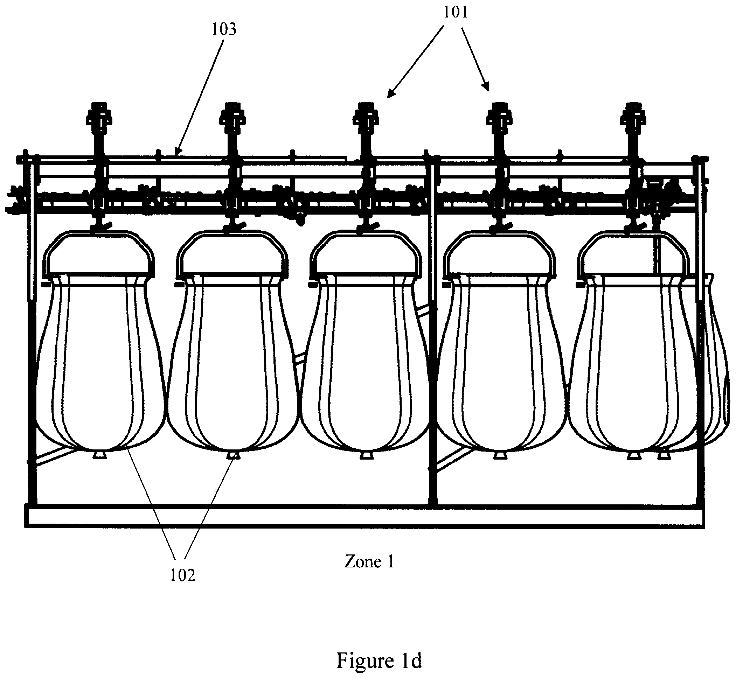

Figures 1c and 1d represent illustrations of Zone 1 of the laundry assembly shown in Figures 1a and 1b in particular, showing a plurality of the automated weighing apparatus 101 arranged in series. Accordingly, Zone 1 in particular represents a more refined representation of an example environment for the utilisation of the automated weighing apparatus 101 of the present invention.

It shall be understood that, the example environment depicted in Figures la and 1b is to provide context of the apparatus 101, and its novel and inventive implications on the operation of the wider system, and Zone 1 in particular. However, there remain novel and inventive adaptations to said environment, in particular, the provision of select automated services across each of the aforementioned Zones (Zones 1-6), so as to facilitate the development of a more fully automated laundry management system.

In a way in which the skilled person will be entirely familiar, soiled laundry may tend to arrive at a laundering installation (such as that illustrated in Figures 1a and 1b) in batches delivered by delivery vehicles, usually in wheeled carts. In such installations, it is desirable for laundry to be processed by the apparatus through the various stages of the laundering process in batches. These batches may not be equal in size to the batches in which the laundry is delivered to the installation. Accordingly, the Installation comprises at least one automated weighing apparatus 101 for storage and laundering of said soiled laundry in batches.

### Figures 2a - 2c

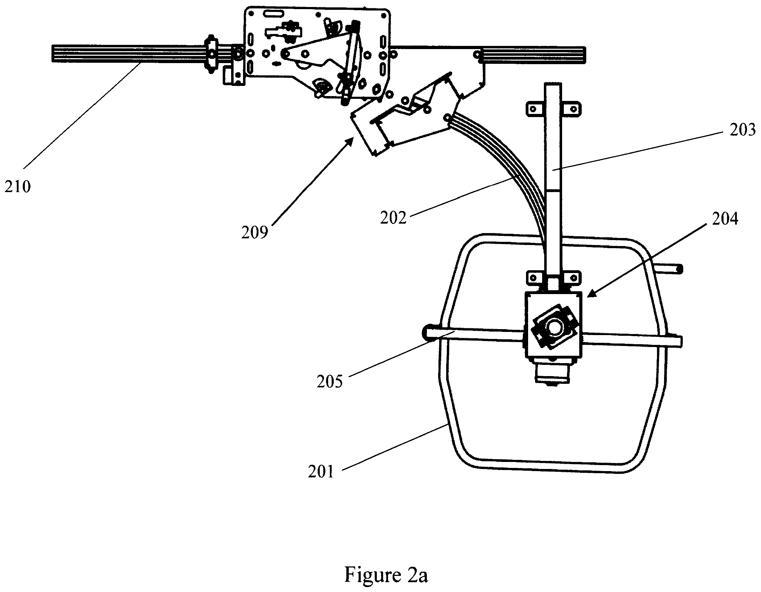

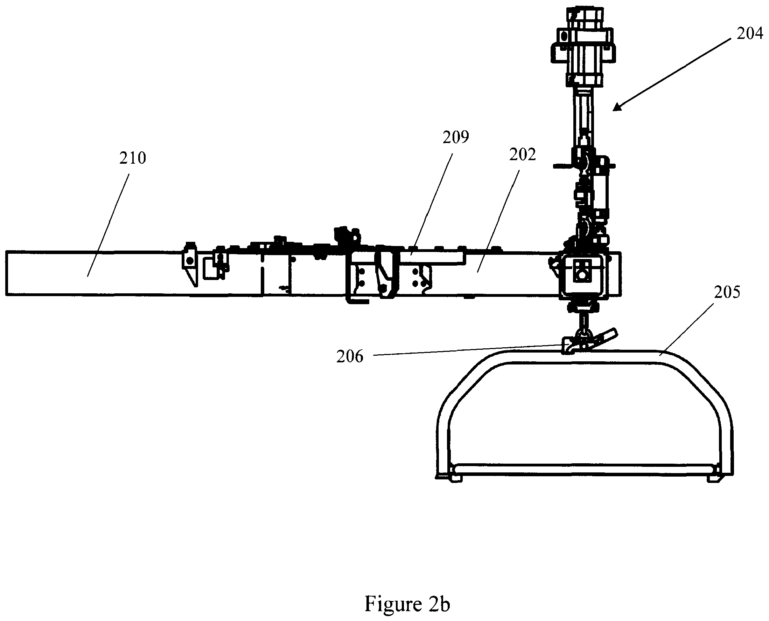

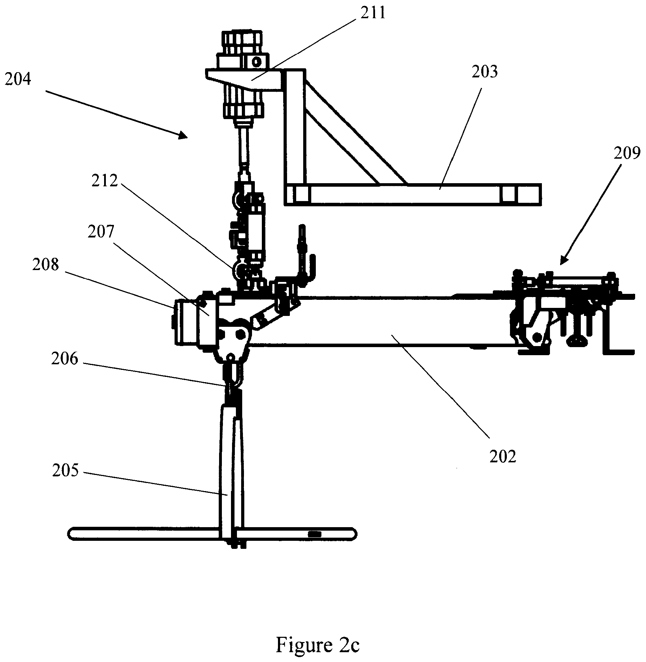

Figures 2a to 2c are intended to assist in illustrating the general structure of the automated weighing apparatus 101 and the way in which it interacts with the wider structure of the aforementioned Installation in which it is utilised (an automated style rail system for commercial laundry installations).

The automated weighing apparatus 101 comprises a container (or "bin") 201, a container rail 202, a supporting frame 203 and a weighing assembly (indicated generally at 204). The container 201 is rigid, typically comprises plastics and / or metals and is dimensioned so as to be suitable to receive a typical commercial load of soiled laundry. The container 201 therefore has a substantially conventional construction, save as will be described, and comprises a container for holding and weighing items of laundry. Thus, items of soiled laundry may be unloaded from delivery vehicles, and then sorted and deposited into said container 201. Laundry items may then be stored in the container 201 until the amount of laundry contained therein meets a desired batch size for commencement of the washing stage of the laundering process.

The container 201 is provided with a container bracket 205, said bracket 205 having a mounting system 206 for releasable attachment of the container 201 to the container rail 202. In particular, the container rail 202 comprises a rail system for freely supporting and slidably retaining at least one container 201 by way of said containers bracket 205 and mounting system 206. The mounting system 206 utilised herein is one of typical design known in the art, allowing for moveable coupling of the container 201 to an underside of the container rail 202, allowing for relative movement therebetween. The container rail 202 is further provided with a rail stop 207 for preventing the container 201 passing over a first remote end 208 of the container rail 202. Moreover, the rail stop 207 is provided with a retaining clip for holding the container 201 adjacent said rail stop 207, so as to hold said container 201 in place ready for filling with soiled laundry (a filling position). A second end of the container rail 202 is retained within an engagement slot of a pivot assembly (indicated generally at 209). The pivot assembly 209 is in turn mounted to a circuit frame (indicated generally at 210) within Zone 1. The pivot assembly 209 therefore links the container rail 202 to the circuit frame 210 and allows for containers 201 to pass therethrough. In particular, the mounting system 206 of the container 201 is able to pass over the length of the container rail 201 from the first end of said frame 208 to the second end, passing through the pivot assembly 209 which comprises a continuation rail therethrough, mimicking the rail structure of the frame 202, the container 201 then passes onto the circuit frame 210 for subsequent laundering. The forces under which the container 201 is urged to pass over the frame 202 and onto the circuit frame 210 are provided by way of the weighing assembly 204.

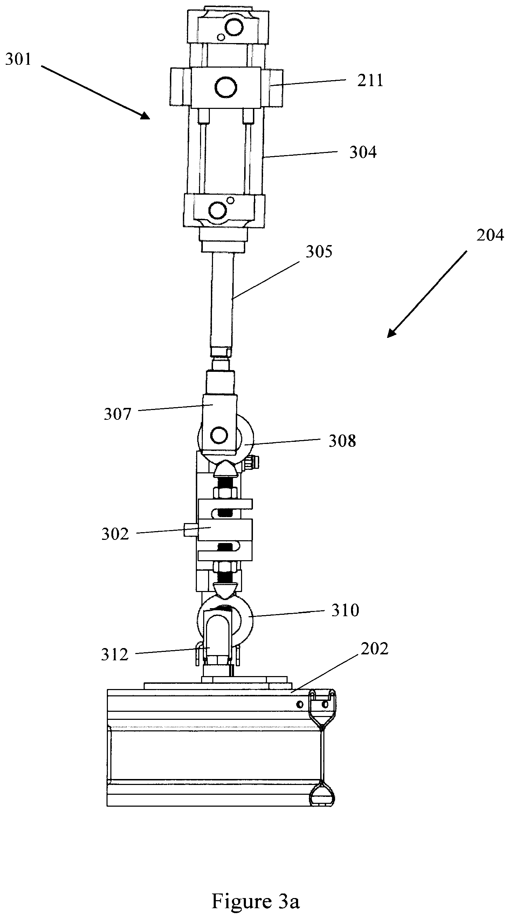

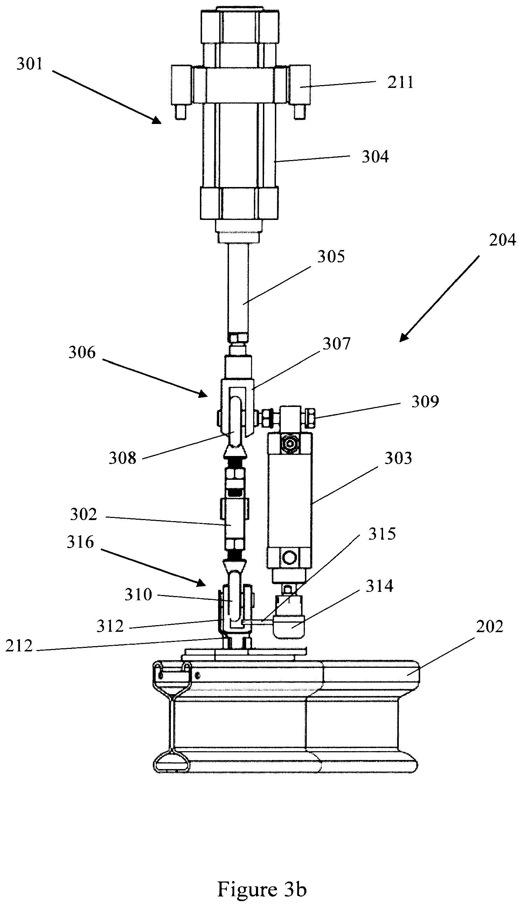

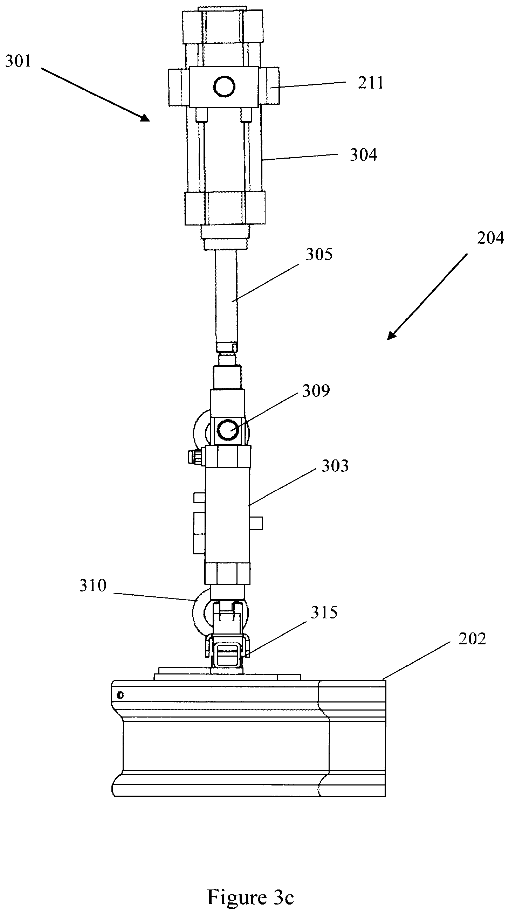

The weighing assembly 204 is connected adjacent a first end to the supporting frame 203 and adjacent a second end to the container rail 202. The supporting frame 203 comprises a rigid frame network that is configured to support the weight of the commercial laundry installation as a whole. In particular, the section of the supporting frame indicated at 203 is situated above the container rail 202 and is positioned so as to support the first end of the weighing assembly 204 substantially directly above the filling position of the container 201. In this regard, the section of the supporting frame 203 is releasably connected to the first end of the weighing assembly 204 by way of a first assembly retaining fixture 211. An upper surface of the container rail 202 is provided with a second assembly retaining fixture 212, for releasable attachment to the weighing assembly 204 adjacent its second end. The weighing assembly 204 therefore extends vertically between the supporting frame 203 and the container rail 202. The supporting frame 203 is therefore configured to support and suspend the container rail 202 by way of the weighing assembly 204. The components of the weighing assembly shall be referenced and discussed by way of Figures 3a - 3c.

### Figures 3a - 3c

Figures 3a to 3c are intended to assist in illustrating the general structure of the weighing assembly 204 and the way in which it enables the apparatus 101 to function and subsequently interact with the wider structure of the aforementioned Installation in which it is utilised (an automated style rail system for commercial laundry installations).

The weighing assembly 204 comprises an actuating member (indicated generally at 301), a load cell 302 and a calibration device 303. The actuating member 301 comprises a hydraulic lifting cylinder (of typical design known in the art), having a cylinder body 304 and elongate actuating member 305. The lifting cylinder 301 is releasably attached to the supporting frame 203 adjacent its first end by way of the first assembly retaining fixture 211. Said first assembly retaining fixture 211 is arranged about the body of the cylinder 304 and retains said cylinder 301 therein using appropriate mechanical fixings. It shall be understood that the first assembly retaining fixture 211 could alternatively be situated above the lifting cylinder 301 and fixed thereto with appropriate mechanical fixings. The elongate actuating member 305 of the cylinder 301 is movable from a retracted position, where it is contained within the body 304, to a protracted position, wherein it extends longitudinally away from said body 304. The elongate actuating member 305 is moveable from said retracted and protracted positions upon an input signal from either a user of the apparatus 101 or upon automated generation of such a signal from a CPU upon completion of a pre-determined condition (in the present case, a pre-set weight limit of the container 201 once it has received an appropriate amount of soiled laundry).

The elongate actuating member 305 of the lifting cylinder 301 is connected at its distal end (with respect to the body of the cylinder 304) to the load cell 302 by way of a first linkage assembly (indicated generally at 306). The first linkage assembly 306 comprises a first bracket element 307 and a first hanging bolt 308. The first bracket element 307 is mechanically fixed at a first end to the distal end of the elongate actuating member 305 of the lifting cylinder and extends laterally to provide an inner area adjacent its second end for receipt of the hanging bolt 308. The first hanging bolt 308 comprises an eyelet and an elongate bolt body, said body having an outer concentric profile. The eyelet of the first hanging bolt 308 is received within the inner area of the bracket element and the bolt body projects laterally away from said eyelet and is mechanically fixed to a first end of the load cell 302. To retain the first hanging bolt 308 within the bracket element 307, a fixing bolt 309 is received through the walls of said bracket 307 and through the eyelet of the first hanging bolt 308. Said fixing bolt is received by an aperture within the walls of the bracket 307 having a concentric inner profile. In a similar manner, the bolt body of the first hanging bolt 308 is received by the first end of the load cell 302 in a mechanical manner, within a first concentric port, facilitating releasable attachment thereto.

The load cell 302 is operable to measure the force exerted on the container rail 202 by the container 201 and takes the form of a conventional load cell, save as will be described. The load cell 302 is adapted so as to be releasably attached to the container rail 202 by way of a second linkage assembly (indicated generally at 316). In particular, the load cell 302 is provided with a second concentric port adjacent its second end, said second concentric port being adapted to facilitate a releasable mechanical engagement with a second hanging bolt 310. The second hanging bolt 310 also comprises an eyelet and elongate bolt body, having an outer concentric profile. The bolt body of said second hanging bolt 310 is received within the second concentric port of the load cell 302 and projects laterally away from the load cell 302. The eyelet of the second hanging bolt 310 is then releasably attached to the second assembly retaining fixture 212 (mounted on an upper surface of the container rail 202) by way of a linkage element 311. In particular, the linkage element 311 comprises a clip that may be passed through both the eyelet of the second hanging bolt 310 and the second assembly retaining fixture 212. Alternatively, the eyelet of the second hanging bolt 310 may be received by a second bracket element 312, which itself is attached to the container rail 202 and forms the second assembly retaining fixture.

Accordingly, the weighing assembly extends laterally between the support frame 203 and the container rail 202 and the distance between said frame 203, 202 is controlled by the length of the weighing assembly 204, which in turn is controlled by the relative positioning of the elongate actuating member 305 of the lifting cylinder 301.

When the elongate actuating member 305 is in the protracted position, the weighing assembly 204 is at its longest, extending vertically between the first assembly retaining fixture 211 of the support frame 203 and the second assembly retaining fixture 212 of the container rail 202, and suspending the container rail 202 substantially horizontally and parallelly with respect to the floor upon which the Installation comprising the apparatus 101 is provided upon. Accordingly, when the elongate actuating member 305 is in the protracted position, and the container 201 is retained at the first end of the container rail 202 the apparatus 101 is said to be in a filling position.

When the elongate actuating member 305 is in the retracted position, the weighing assembly 204 is at its shortest. Movement of said elongate actuating member from protracted to retracted has the effect of lifting the first end of the container rail 202 towards the body 304 of the lifting cylinder 301. During retraction, the container rail pivots at its second end about the pivot assembly 209, maintaining mechanical linkage of the rail of the container rail 202 and the rail of the circuit frame 210. The weighing assembly therefore still extends vertically between the first assembly retaining fixture 211 of the support frame 203 and the second assembly retaining fixture 212 of the container rail 202, however, the container rail 202 is now provided with a sloping angle, wherein the first end of the container rail 202 is positioned higher than the second end. Accordingly, when the elongate actuating member 305 is in the retracted position, the container 201 moves under gravity along the body of the container rail 202, over the second end of the frame 202, through the pivot assembly 209 and onto the circuit frame 210 for subsequent laundering of its contents. The apparatus 101 is said to be in a dispensing position. Said dispensing position is adopted when the amount of laundry contained within the container 201 meets the desired batch size. Said desired batch size condition can either be manual in nature, and the actuation of the lifting cylinder 301 commenced by an input from a user, or upon an automatically generated input signal from a CPU upon completion of a pre-determined condition (in the present case, a pre-set weight limit of the container 201).

As previously noted, over time, the accuracy of the load cell 302 will reduce on account of repeat use / wear and tear. Accordingly, the weighing assembly 204 is provided with the calibration device 303. The calibration device 303 comprises a motor apparatus, typically a pneumatic cylinder, which is operable when supplied with pressurised air to exert a known force on the load cell 302 for calibration purposes.

The calibration device 303 is releasably attached adjacent a first end to the first linkage assembly 306 by way of the fixing bolt 309. In particular, the first end of the calibration device is adapted to receive the fixing bolt therethrough and is spaced laterally from the first bracket element 307 so as to situate the calibration device 303 alongside the load cell 302. Moreover, the calibration device 303 comprises an elongate calibration cylinder 313 and a calibration actuating element 314. The calibration cylinder 313 projects vertically away from the first linkage assembly 306, alongside and substantially parallelly to the load cell 302.

The calibration actuating element 314 of the calibration cylinder 303 is movable from a retracted position, where it is contained within the body of the cylinder 303, to a protracted position, wherein it extends vertically away from said body. The calibration actuating element 314 is moveable from said retracted and protracted positions upon an input signal from either a user of the apparatus 101 or upon automated generation of such a signal from a CPU when calibration of the load cell is to be carried out.

The calibration actuating element 314 of the calibration cylinder 303 is connected at its distal end (with respect to the body of the cylinder 303) to the linkage element 311 by way of an elongate engaging element 315. In particular, the distal end of the calibration actuating element 314 is releasably mechanically attached adjacent a first end of the elongate engaging element 315 by way of a bolt fixing. The elongate engaging element 315 extends horizontally and is releasably connected to the linkage element 311 adjacent its second end. In particular, the elongate engaging element 315 is provided with an aperture adjacent its second end, dimensioned to receive the linkage element 311 therethrough. The elongate engaging element 315 is therefore arranged about a body of the linkage element 311 and may pass freely over said linkage element 311 upon protraction and retraction of the calibration actuating element 314. The elongate engaging element 315 is dimensioned so as to match the spacing of the calibration cylinder 303 relative to the attachment at its first end to the first linkage assembly 306.

The calibration actuating element 314 is moveable relative to a body of the calibration device 303 between a non-calibrating position, in which the calibration actuating element 314 is retracted and housed within the body of the cylinder 303, and a calibrating position, in which the calibration actuating element 314 is protracted and extends vertically away from the body of the cylinder 303.

Accordingly, in the non-calibrating position, the calibration actuating element 314 is retracted, the elongate engaging element 315 is freely supported over the body of the linkage element 311 and no forces are being exerted upon the load cell 302. Alternatively, in the calibrating position, the calibration actuating element 314 is protracted, the elongate engaging element 315 has passed over the body of the linkage element 311 and now abuts a top surface of the second assembly retaining fixture 212. Accordingly, the calibration actuating element 314 is applying a known force upon the load cell for the purposes of calibration by translating said forces onto said load cell by way of the elongate engaging element 315 pressing against the second assembly retaining fixture 212. In the alternative arrangement previously noted herein, where the second bracket element 312 is utilised, said elongate engaging element 315 presses against said second bracket element 312. The load cell 302 is calibrated so that its reading is zero when the container 201 is in the filling position, at the end of the container rail 202. Accordingly, the calibration device 303 is utilised so as to ensure that the load cell 302 reads as zero when the load cell 302 is bearing the weight of the container rail 202 and an empty container 201.

Through arranging the calibration device 303 adjacent and parallelly to the load cell 302, said components of the weighing assembly 204 are mutually moveable upon actuation of the lifting cylinder 301. Moreover, the calibration device 303 is selectively operatively connected to the load cell 302 of the assembly 204. In doing so, the weighing assembly 204 can be automatically switched from calibrating to non-calibrating positions, as well as filling and non-filling positions either autonomously / upon electronical input signal having had a threshold met, or alternatively, manually by a user.

Moreover, the calibration device 303 may be retro-fitted to existing commercial laundering apparatus', provided said apparatus have the ability to facilitate the incorporation of appropriate vertically aligning mechanical linkages.

## Claims

1. An automated weighing apparatus (101) comprising:
a container (201), suitable for containing at least one object to be weighed; a container rail (202), configured to freely support said container (201) which is movably coupled to said container rail (202); and a supporting frame (203);
**characterised in that**
said supporting frame (203) configured to support the container rail (202) by way of a vertically extending weighing assembly (204), said weighing assembly (204) being connected adjacent its upper end to the supporting frame (203) and adjacent its lower end to the container rail (202), said weighing assembly (204) comprising a lifting cylinder (301), a load cell (302) and a calibration device (303).

2. The automated weighing apparatus of claim 1, wherein the lifting cylinder (301) is situated adjacent the upper end of the weighing assembly (204) and is connected to the supporting frame (203).

3. The automated weighing apparatus of either claim 1 or claim 2, wherein the lifting cylinder (301) is provided with an elongate rod (305), extending downwardly and connected to the load cell (302).

4. The automated weighing apparatus of claim 3, wherein the elongate rod (305) is connected to the load cell (302) by way of a first linkage (306) adjacent a lower end of said rod (305).

5. The automated weighing apparatus of claim 4, wherein the load cell (302) and calibration device (303) are each attached adjacent their respective upper ends to the first linkage (306).

6. The automated weighing apparatus of either claim 4 or claim 5, wherein the load cell (302) is releasably attached adjacent its lower end to a second linkage (316), said second linkage (316) being connected to the container rail (202).

7. The automated weighing apparatus of claim 6, wherein the calibration device (303) is releasably attached adjacent its lower end to the second linkage (316) by way of an elongate engaging element (315).

8. The automated weighing apparatus of claim 7, wherein the calibration device (303) is aligned alongside and parallelly to the load cell (302) and is selectively operatively connected to said load cell (302) by way of the elongate engaging element (315).

9. The automated weighing apparatus of claim 8, wherein the elongate engaging element (315) is connected at a first end to a calibration actuating element (314) of the calibration device (303).

10. The automated weighing apparatus of claim 9, wherein the elongate engaging element (315) slidably retains the second linkage (316) adjacent its second end.

11. The automated weighing apparatus of claim 10, wherein the elongate engaging element (315) extends laterally between the second linkage (316) and the calibration actuating element (314) of the calibration device (303).

12. The automated weighing apparatus of either claim 10 or claim 11, wherein the calibration actuating element (314) is moveable relative to a body of the calibration device (303) between a non-calibrating position, in which the calibration actuating element (314) is retracted and housed partially within the body of the calibration device (303), and a calibrating position, in which the calibration actuating element (314) is protracted and extends longitudinally from the body of the calibration device (303).

13. The automated weighing apparatus of claim 12, wherein the elongate engaging element (315) is arranged about a body of the second linkage (316) when the calibration device (303) is in the non-calibrating position.

14. The automated weighing apparatus of either claim 12 or claim 13, wherein the elongate engaging element (315) contacts either a second end of the second linkage (316) or the container rail (202) when the calibration device (303) is in the calibrating position, exerting a known force upon the load cell (302).

15. The automated weighing apparatus of any preceding claim, wherein the load cell (302) and calibration device (303) are arranged so as to be together moveable upon movement of the lifting cylinder (301).

## Patentansprüche

1. Automatisierte Wägevorrichtung (101), umfassend:
einen Behälter (201), der geeignet ist, mindestens einen zu wiegenden Gegenstand zu enthalten; eine Behälterschiene (202), die dazu konfiguriert ist, den Behälter (201), der beweglich mit der Behälterschiene (202) gekoppelt ist, frei zu tragen; und einen Stützrahmen (203);
**dadurch gekennzeichnet, dass**
der Stützrahmen (203) dazu konfiguriert ist,
die Behälterschiene (202) über eine sich senkrecht erstreckende Wägeanordnung (204) zu stützen, wobei die Wägeanordnung (204) benachbart zu ihrem oberen Ende mit dem Stützrahmen (203) und benachbart zu ihrem unteren Ende mit der Behälterschiene (202) verbunden ist, wobei die Wägeanordnung (204) einen Hubzylinder (301), eine Wägezelle (302) und eine Kalibriereinrichtung (303) umfasst.

2. Automatisierte Wägevorrichtung nach Anspruch 1, wobei der Hubzylinder (301) angrenzend an das obere Ende der Wägeanordnung (204) angeordnet ist und mit dem Stützrahmen (203) verbunden ist.

3. Automatisierte Wägevorrichtung nach entweder Anspruch 1 oder Anspruch 2, wobei der Hubzylinder (301) mit einer länglichen Stange (305) versehen ist, die sich nach unten erstreckt und mit der Wägezelle (302) verbunden ist.

4. Automatisierte Wägevorrichtung nach Anspruch 3, wobei die längliche Stange (305) mit der Wägezelle (302) über ein erstes Gestänge (306) angrenzend an ein unteres Ende der Stange (305) verbunden ist.

5. Automatisierte Wägevorrichtung nach Anspruch 4, wobei die Wägezelle (302) und die Kalibriereinrichtung (303) jeweils angrenzend an ihre jeweiligen oberen Enden an dem ersten Gestänge (306) angebracht sind.

6. Automatisierte Wägevorrichtung nach entweder Anspruch 4 oder Anspruch 5, wobei die Wägezelle (302) angrenzend an ihr unteres Ende an einem zweiten Gestänge (316) lösbar angebracht ist, wobei das zweite Gestänge (316) mit der Behälterschiene (202) verbunden ist.

7. Automatisierte Wägevorrichtung nach Anspruch 6, wobei die Kalibriereinrichtung (303) angrenzend an ihr unteres Ende über ein längliches Eingriffselement (315) an dem zweiten Gestänge (316) lösbar angebracht ist.

8. Automatisierte Wägevorrichtung nach Anspruch 7, wobei die Kalibriereinrichtung (303) neben und parallel zu der Wägezelle (302) ausgerichtet ist und über das längliche Eingriffselement (315) selektiv betriebsmäßig mit der Wägezelle (302) verbunden ist.

9. Automatisierte Wägevorrichtung nach Anspruch 8, wobei das längliche Eingriffselement (315) an einem ersten Ende mit einem Kalibrierbetätigungselement (314) der Kalibriereinrichtung (303) verbunden ist.

10. Automatisierte Wägevorrichtung nach Anspruch 9, wobei das längliche Eingriffselement (315) das zweite Gestänge (316) verschiebbar angrenzend an sein zweites Ende hält.

11. Automatisierte Wägevorrichtung nach Anspruch 10, wobei sich das längliche Eingriffselement (315) seitlich zwischen dem zweiten Gestänge (316) und dem Kalibrierbetätigungselement (314) der Kalibriereinrichtung (303) erstreckt.

12. Automatisierte Wägevorrichtung nach entweder Anspruch 10 oder Anspruch 11, wobei das Kalibrierbetätigungselement (314) relativ zu einem Körper der Kalibriereinrichtung (303) zwischen einer nicht kalibrierenden Position, in der sich das Kalibrierbetätigungselement (314) zurückgezogen und teilweise innerhalb des Körpers der Kalibriereinrichtung (303) untergebracht befindet, und einer kalibrierenden Position bewegbar ist, in der das Kalibrierbetätigungselement (314) herausgezogen ist und sich in Längsrichtung von dem Körper der Kalibriereinrichtung (303) erstreckt.

13. Automatisierte Wägevorrichtung nach Anspruch 12, wobei das längliche Eingriffselement (315) um einen Körper des zweiten Gestänges (316) herum angeordnet ist, wenn sich die Kalibriereinrichtung (303) in der nicht kalibrierenden Position befindet.

14. Automatisierte Wägevorrichtung nach entweder Anspruch 12 oder Anspruch 13, wobei das längliche Eingriffselement (315) entweder ein zweites Ende des zweiten Gestänges (316) oder die Behälterschiene (202) berührt, wenn sich die Kalibriereinrichtung (303) in der kalibrierenden Position befindet, wobei eine bekannte Kraft auf die Wägezelle (302) ausgeübt wird.

15. Automatisierte Wägevorrichtung nach einem der vorhergehenden Ansprüche, wobei die Wägezelle (302) und die Kalibriereinrichtung (303) so angeordnet sind, dass sie bei einer Bewegung des Hubzylinders (301) zusammen bewegbar sind.

## Revendications

1. Appareil de pesée automatisé (101) comprenant :
un récipient (201), apte à contenir au moins un objet à peser ; un rail de récipient (202), conçu pour supporter librement ledit récipient (201) qui est couplé de manière mobile audit rail de récipient (202) ; et un cadre de support (203) ;
**caractérisé en ce que**
ledit cadre de support (203) conçu pour supporter
le rail de récipient (202) au moyen d'un
ensemble de pesée (204) s'étendant verticalement, ledit ensemble de pesée (204) étant raccordé adjacent à son extrémité supérieure au cadre de support (203) et adjacent à son extrémité inférieure au rail de récipient (202), ledit ensemble de pesée (204) comprenant un vérin de levage (301), une cellule de charge (302) et un dispositif d'étalonnage (303).

2. Appareil de pesée automatisé selon la revendication 1, ledit vérin de levage (301) étant situé adjacent à l'extrémité supérieure de l'ensemble de pesée (204) et étant raccordé au cadre de support (203).

3. Appareil de pesée automatisé selon la revendication 1 ou la revendication 2, ledit vérin de levage (301) étant doté d'une tige allongée (305), s'étendant vers le bas et raccordée à la cellule de charge (302).

4. Appareil de pesée automatisé selon la revendication 3, ladite tige allongée (305) étant raccordée à la cellule de charge (302) au moyen d'une première liaison (306) adjacente à une extrémité inférieure de ladite tige (305).

5. Appareil de pesée automatisé selon la revendication 4, ladite cellule de charge (302) et ledit dispositif d'étalonnage (303) étant chacun fixés adjacents à leurs extrémités supérieures respectives à la première liaison (306).

6. Appareil de pesée automatisé selon la revendication 4 ou la revendication 5, ladite cellule de charge (302) étant fixé de manière amovible adjacent à son extrémité inférieure à une seconde liaison (316), ladite seconde liaison (316) étant reliée au rail de récipient (202).

7. Appareil de pesée automatisé selon la revendication 6, ledit dispositif d'étalonnage (303) étant fixé de manière amovible adjacent à son extrémité inférieure à la seconde liaison (316) au moyen d'un élément de mise en prise allongé (315).

8. Appareil de pesée automatisé selon la revendication 7, ledit dispositif d'étalonnage (303) étant aligné le long de la cellule de charge (302) et parallèlement à celle-ci et étant sélectivement raccordé de manière fonctionnelle à ladite cellule de charge (302) au moyen de l'élément de mise en prise allongé (315).

9. Appareil de pesée automatisé selon la revendication 8, ledit élément de mise en prise allongé (315) étant raccordé au niveau d'une première extrémité à un élément d'actionnement d'étalonnage (314) du dispositif d'étalonnage (303).

10. Appareil de pesée automatisé selon la revendication 9, ledit élément de mise en prise allongé (315) retenant de manière coulissante la seconde liaison (316) adjacente à sa seconde extrémité.

11. Appareil de pesée automatisé selon la revendication 10, ledit élément de mise en prise allongé (315) s'étendant latéralement entre la seconde liaison (316) et l'élément d'actionnement d'étalonnage (314) du dispositif d'étalonnage (303).

12. Appareil de pesée automatisé selon la revendication 10 ou la revendication 11, ledit élément d'actionnement d'étalonnage (314) étant mobile par rapport à un corps du dispositif d'étalonnage (303) entre une position de non-étalonnage, dans laquelle l'élément d'actionnement d'étalonnage (314) est rétracté et logé partiellement à l'intérieur du corps du dispositif d'étalonnage (303), et une position d'étalonnage, dans laquelle l'élément d'actionnement d'étalonnage (314) est allongé et s'étend longitudinalement à partir du corps du dispositif d'étalonnage (303).

13. Appareil de pesée automatisé selon la revendication 12, ledit élément de mise en prise allongé (315) étant agencé autour d'un corps de la seconde liaison (316) lorsque le dispositif d'étalonnage (303) est dans la position de non-étalonnage.

14. Appareil de pesée automatisé selon la revendication 12 ou la revendication 13, ledit élément de mise en prise allongé (315) entrant en contact avec une seconde extrémité de la seconde liaison (316) ou avec le rail de récipient (202) lorsque le dispositif d'étalonnage (303) est dans la position d'étalonnage, exerçant une force connue sur la cellule de charge (302).

15. Appareil de pesée automatisé selon une quelconque revendication précédente, ladite cellule de charge (302) et ledit dispositif d'étalonnage (303) étant agencés de façon à être ensemble mobiles lors du mouvement du vérin de levage (301).
